# EUROPÄISCHE PATENTSCHRIFT

(11) **EP 3 241 946 B1**
(45) Veröffentlichungstag und Bekanntmachung des Hinweises auf die Patenterteilung: **28.08.2019**
(21) Anmeldenummer: 16168047.5
(22) Anmeldetag: 03.05.2016
(51) Int. Cl.: D21H 19/02, D21H 19/06, D21H 19/08, D21H 19/82, B32B 29/00, B32B 29/06, C23C 4/02

(54) **VERFAHREN ZUM HERSTELLEN EINES BESCHICHTETEN VERPACKUNGSMATERIALS**
METHOD FOR PRODUCING A COATED PACKAGING MATERIAL
PROCEDE DE FABRICATION D'UN MATERIAU D'EMBALLAGE REVETU

(43) Veröffentlichungstag der Anmeldung: 08.11.2017
(73) Patentinhaber: Mayr-Melnhof Karton AG, 1041 Wien (AT)
(72) Erfinder: Vorenkamp, Harman, 71549 Auenwald (DE)
(74) Vertreter: Hofstetter, Schurack & Partner

(56) Entgegenhaltungen:
- WO-A1-96/31649
- WO-A1-2012/099698
- WO-A1-2015/049262
- DATABASE WPI Week 200432 Thomson Scientific, London, GB; AN 2004-342228 XP002763863, & JP 2003 128777 A (SHOWA DENKO KK) 8. Mai 2003 (2003-05-08)

## Beschreibung

Die Erfindung betrifft ein Verfahren zum Herstellen eines beschichteten Verpackungsmaterials, ein beschichtetes Verpackungsmaterial sowie eine Verpackung aus einem derartigen Verpackungsmaterial.

Metallbeschichtete Verpackungsmaterialien auf Cellulose-Basis sind in einer Vielzahl von Anwendungen nützlich. Beispielsweise eigenen sich metallbeschichtete Papiere und Kartone zur Herstellung von Geschenkpapier, Verpackungskartons und sonstigen Verpackungstypen. Weitere bekannte Anwendungen sind die Verwendung solcher Verpackungsmaterialien zur Produktidentifikation in Tabakerzeugnissen, Etiketten, Hüllen, Kosmetikverpackungen, Lottoscheinen und dergleichen. Im Allgemeinen wird das metallbeschichtete Verpackungsmaterial dabei mit einer Markenkennung, einem dekorativen Design und dergleichen bedruckt und kann unterschiedliche Glanzgrade und oder andere Leistungsmerkmale aufweisen. Insbesondere ist es wünschenswert, dass metallbeschichtete Verpackungsmaterialien eine möglichst hochreflektierende, glänzende Oberfläche aufweisen. Unbehandelte Substrate auf Cellulose-Basis weisen aber normalerweise eine relativ unregelmäßige Oberfläche auf, wodurch direkt aufgebrachte Metalle oder Metallpartikel keine reguläre Ausrichtung aufweisen und einfallendes Licht inkohärent streuen und reflektieren, was zu einem matten Oberflächeneindruck führt. Daher wird üblicherweise zunächst eine Grundierung auf das cellulosehaltige Substrat aufgebracht, auf welcher anschließend die metallhaltige Schicht erzeugt wird. Aus der WO 2013/134359 A1 ist es beispielsweise bekannt, Grundierungsschichten aus Acrylaten herzustellen, die durch UV- oder Elektronenstrahlen (Electron Beam Curing) radikalisch polymerisiert werden.

WO 2015/049262 A1 offenbart ein Verfahren zur Herstellung glänzender Metallbeschichtungen auf Papiersubstraten mit Hilfe von UV-härtbaren Zusammensetzungen.

WO 2012/099698 A1 offenbart ein Verfahren zum Aufbringen einer durch Energiezufuhr härtbaren Grundierung und einer brillianten metallischen Druckfarbe auf ein Papp- oder Papiersubstrat. Die Grundierung kann unter Verwendung eines energieaushärtenden Systems, wie eines UV- oder EB-Härtungssystems, gehärtet werden.

WO 96/31649 A1 offenbart ein Blattmaterial-Substrat, wie zum Beispiel einen Film oder ein Papierblatt, mit einer Polymerbasisbeschichtung, die über einer Oberfläche des Blattmaterial-Substrats liegt und an dieser haftet. Die Basisbeschichtung umfasst ein strahlungsgehärtetes vernetztes Polymer, das von mindestens einer dampfabgeschiedenen Acrylatpräpolymerzusammensetzung abgeleitet ist. Eine Metallschicht ist auf einer Oberfläche der Grundbeschichtung abgeschieden und eine Polymerdeckschicht liegt über und haftet an einer Oberfläche der Metallschicht.

Aus der Datenbank WPI, Woche 200432, Thomson Scientific, London, GB, AN 2004-342228 vom 8. Mai 2003 ist eine Startverbindung für kationische Polymerisationsreaktionen bekannt.

Als nachteilig an den bekannten Grundierungen ist allerdings der Umstand anzusehen, dass diese beim Härten vergleichsweise stark schrumpfen, was zu einer schlechten Haftung der Grundierung und damit der metallischen Schicht auf dem Substrat führt. Darüber hinaus enthalten Grundierungen häufig auch hochdeckende Farb- und Effektsysteme, so dass das zum Härten verwendete UV-Licht nicht bis zum Substrat vordrigen kann, was ebenfalls zu einer unvollständigen Durchhärtung führen kann. Zudem sind radikalische Polymerisationen, bei denen die aktive Spezies ein Molekül mit einem ungepaarten Elektron ist, schwer steuerbar und werden durch Sauerstoff inhibiert, was ohne die teuere und aufwändige Verwendung von Inertgasen und Schutzräumen ebenfalls zu unvollständigen und ungleichmäßigen Polymerisierungsgraden und leichtem Ablösen der Grundierung führen kann.

Aufgabe der vorliegenden Erfindung ist es, ein gattungsgemäßes Verfahren zum Herstellen eines beschichteten Verpackungsmaterials so zu verbessern, dass eine Grundierung mit einer verbesserten Haftung auf cellulosehaltigen Substraten herstellbar ist. Eine weitere Aufgabe der vorliegenden Erfindung besteht darin, eine Verpackung anzugeben, die zumindest teilweise aus einem derartigen Verpackungsmaterial besteht.

Die Aufgaben werden erfindungsgemäß durch ein Verfahren mit den Merkmalen des Patentanspruchs 1 sowie durch eine Verpackung gemäß Anspruch 14 gelöst. Vorteilhafte Ausgestaltungen mit zweckmäßigen Weiterbildungen der Erfindung sind in den jeweiligen Unteransprüchen angegeben, wobei vorteilhafte Ausgestaltungen jedes Erfindungsaspekts als vorteilhafte Ausgestaltungen der jeweils anderen Erfindungsaspekte und umgekehrt anzusehen sind.

Ein erster Aspekt der Erfindung betrifft ein Verfahren zum Herstellen eines beschichteten Verpackungsmaterials, bei welchem zumindest die Schritte a) Bereitstellen eines cellulosehaltigen Substrats, b) Beschichten zumindest eines Oberflächenbereichs des Substrats mit einer härtbaren Zusammensetzung und Härten der Zusammensetzung unter Ausbildung einer Grundierung und c) Erzeugen einer metallhaltigen Schicht auf zumindest einem Oberflächenbereich der Grundierung durchgeführt werden. Eine verbesserte Haftung der Grundierung auf dem cellulosehaltigen Substrat wird erfindungsgemäß durch erzielt, dass die in Schritt b) verwendete Zusammensetzung wenigstens ein ionisch polymerisierbares Monomer enthält, das durch ionische Polymerisierung gehärtet wird. Im Unterschied zur radikalischen Polymerisation wird die Reaktion bei der ionischen Polymerisation durch Ionen initiiert und getragen. Die ionische Polymerisation kann wie die radikalische Polymerisation in die vier Schritte Initiation, Wachstum, Kettenübertragung und Abbruch unterteilt werden. Die Erfindung basiert dabei auf der Erkenntnis, dass der Schrumpf einer durch ionische Polymerisation hergestellten Grundierung wesentlich geringer ist als bei einer durch radikalische Polymerisation hergestellten und typischerweise unter 5 %, insbesondere unter 3 % liegt. Dadurch besitzt die erfindungsgemäß hergestellte Grundierung eine besonders gute Haftung auf dem cellulosehaltigen Substrat. Darüber hinaus sind Ionen als Träger der Polymerisierungsreaktion wesentlich langlebiger als Radikale, reagieren sehr selektiv und sind relativ unempfindlich gegenüber Sauerstoff, so dass die Polymerisierung ohne Schutzgasatmosphäre durchführbar ist und nach der Initiierung sogar im Dunkeln kontinuierlich fortschreiten kann, so dass auch bei stark gefärbten und besonders dicken Grundierungen eine Durchhärtung bis zum Substrat gewährleistet ist. Weiterhin ermöglicht eine ionische Polymerisation die Herstellung von sehr flexiblen Grundierungen mit dementsprechend geringer Bruchneigung, was bei der Verwendung der erfindungsgemäß hergestellten Verpackungsmaterialien zur Herstellung von Verpackungen von besonderem Vorteil ist. Speziell Rillungen, Hoch- und Tiefprägungen sowie Microprägungen benötigen einen hoch flexiblen Untergrund bzw. eine hoch flexible Grundierung. Im Unterschied zu radikalisch polymerisierenden Zusammensetzungen können ionisch polymerisierende Zusammensetzungen zudem zumindest annähernd geruchsfrei bzw. emissionsfrei formuliert werden und führen nach der Polymerisation zu ebenso emissionsarmen oder emissionsfreien Grundierungsschichten, was zu einem deutlich geringeren Gefährdungs- und Belästigungspotenzial für den Verarbeiter bei der Herstellung führt. Ebenso kann vorteilhaft auf aufwändige und teuere Inertgas- oder Absauganlagen verzichtet werden. Weitere Vorteile bestehen in der Möglichkeit, hochglänzende metallhaltige Schichten auf der erfindungsgemäß hergestellten Grundierung zu erzeugen, da diese bei der Härtung aufgrund des gleichmäßigen Reaktionsfortschritts von der Oberfläche in Richtung des Substrats eine entsprechend gleichmäßige und gut beschichtbare Oberfläche für die metallhaltige Schicht bildet, wobei Unebenheiten der Substratoberfläche automatisch egalisiert werden. Das cellulosehaltige Substrat kann grundsätzlich unbeschichtet oder bereits mit einer oder mehreren Schichten versehen sein, wobei ein unbeschichtetes Substrat bevorzugt ist. Beispielsweise kann das Substrat gestrichenes oder ungestrichenes Papier, gestrichener oder ungestrichener Karton oder gestrichene oder ungestrichene Pappe sein.

In einer vorteilhaften Ausgestaltung der Erfindung ist es vorgesehen, dass die in Schritt b) verwendete Zusammensetzung anionisch oder kationisch und/oder durch lebende ionische Polymerisierung gehärtet wird. Bei einer anionischen Polymerisierung sind die aktiven Spezies Anionen. Anionische Polymerisation findet bevorzugt bei Monomeren mit elektronenziehenden (-M-Effekt) Substituenten wie Nitril-, Carboxy-, Phenyl- und Vinyl-Gruppen statt. Bei einer kationischen Polymerisierung sind die aktiven Spezies Kationen. Kationische Polymerisation findet bevorzugt bei Monomeren mit elektronenschiebenden (+M-Effekt) Substituenten statt und läuft in der Regel über Carbenium-, Oxonium-, Ammonium-Ionen und dergleichen. Bei Abwesenheit von Abbruchreaktionen bleiben die Anionen oder Kationen auch nach vollständigem Umsatz des Monomers erhalten, so dass die geladenen Polymere nach Zusatz weiteren Monomers ihr Kettenwachstum fortsetzen können, wodurch eine sogenannte lebende Polymerisation (living polymerization) ermöglicht wird. Hierdurch wird vorteilhaft eine kovalente Anbindung der metallhaltigen Schicht an die Grundierung ermöglicht, wenn die metallhaltige Schicht ebenfalls unter Verwendung einer Formulierung mit entsprechenden ionisch polymerisierbaren Monomeren, beispielsweise als metallhaltiger Lack oder metallhaltige Tinte, hergestellt wird, wodurch die metallhaltige Schicht besonders zuverlässig auf der Grundierung haftet. Ebenso ist es möglich, bedarfsweise auch zunächst eine zweite Grundierungs- oder Funktionsschicht auf der ersten Grundierung zu erzeugen, bevor die metallhaltige Schicht erzeugt wird.

In einer weiteren vorteilhaften Ausgestaltung der Erfindung ist es vorgesehen, dass die in Schritt b) verwendete Zusammensetzung mittels eines Initiators, insbesondere einer vorzugsweise blockierten Verbindung aus der Gruppe der Lewis- und/oder Brønsted-Säuren und/oder der Lewis- und/oder Brønsted-Basen, und/oder durch thermische und/oder photochemische Aktivierung gehärtet wird. Mit Hilfe eines Initiators kann die Polymerisierungsreaktion einerseits kontrolliert gestartet und andererseits im Hinblick auf die gewünschte Kettenlängenverteilung eingestellt werden. Der Initiator kann grundsätzlich direkt zugesetzt werden oder sich erst durch Reaktion mit dem Monomer bilden. Im Fall einer kationischen Polymerisation können Lewis-Säuren verwendet werden, die die kationische Polymerisation bereits bei niedrigen Temperaturen initiieren. Die entstehenden Polymere besitzen eine relativ große Molmasse. Eingesetzt werden können beispielsweise, einzeln und in beliebiger Kombination, Metallhalogenide wie BF₃, SnCl₄, SbCl₅, ZnCl₂, TiCl₄, PCl₅ und AlCl₃, Oxyhalogenide wie POCl₃, CrO₂Cl, SOCl₂, VOCl₃ und dergleichen, Tritylchlorid sowie Organometallverbindungen wie RAlCl₂, R₂AlCl, R₃Al oder Benzyl(tetrahydrothiophenium)hexafluorantimonat. Der Start der Polymerisation mit Lewis-Säuren kann über die Anwesenheit eines Protonendonors wie Wasser, Alkohol oder einer organische Säure begünstigt werden. Dementsprechend kann die Reaktion auch in Anwesenheit von Luftfeuchtigkeit, Feuchtigkeit im Substrat etc. durchgeführt werden. Brønsted-Säuren können durch Protonierung des Monomers die Reaktion starten. Die eingesetzte Säure sollte generell stark genug sein, um eine ausreichende Menge an protonierten Monomeren zu produzieren, sollte aber auch nicht zu stark nukleophil sein, da sonst eine vorzeitige Termination durch Kombination mit dem protoniertem Monomer/Oligomer/Polymer stattfinden kann, was zu relativ kurzen Kettenlängen führen würde. Deshalb sind Halogensäuren weniger bevorzugt, während Perchlor-, Schwefel-, Phosphor-, Fluorsulfon-, Chlorsulfon-, Methansulfon- und Trifluormethansulfonsäure besonders geeignet sind. Brønsted-Basen und/oder Lewis-Basen können insbesondere zur Initiierung der anionischen Polymerisation verwendet werden. Auch hier eignen sich zahlreiche Verbindungen als Initiatoren wie beispielsweise, einzeln und in beliebiger Kombination, Metallamide wie (Na/K)NH₂ und LiC₂H₅, Alkoxide, Hydroxide, Cyanide, Phosphine, Amine, organometallische Verbindungen, insbesondere Lithiumorganische Verbindungen wie Alkyllithiumverbindungen, Alkoholate, Alkalimetalle oder PhMgBr. Der Start der Polymerisation erfolgt dabei durch die Addition eines Nukleophils an das Monomer. Durch die Wahl einer thermischen und/oder photochemische Aktivierung kann die ionische Polymerisationsreaktion bedarfsweise initiiert werden.

Weitere Vorteile ergeben sich, indem das wenigstens eine ionisch polymerisierbare Monomer ausgewählt wird aus einer Gruppe, die Epoxide, insbesondere der cycloaliphatischen Epoxide und Glycidylether, Isoprene, Cyanoacrylate, Lactide, Caprolactone, Caprolactame, Alkylcyclotrisiloxane, Vinylether und Isobutene umfasst und/oder aus einer Gruppe, die Verbindungen mit wenigstens einem elektronenschiebenden Substituenten, insbesondere einer oder mehrerer Alkoxy-, Phenyl-, Vinyl- und/oder 1,1-Dialkylgruppen umfasst. Hierdurch können Grundierungen mit besonders guter Flexibilität, besonders guter Haftung auf Cellulose, hoher Abriebsbeständigkeit, hohem Glanz, guter Härte, hoher Chemikalienbeständigkeit und guter Barrierewirkung hergestellt werden. Als Epoxid kann beispielsweise 3,4-Epoxycyclohexylmethyl-3,4-epoxycyclohexancarboxylat (7-Oxa-bicyclo[4.1.0]heptan-3-ylmethyl-7-oxa-bicyclo[4.1.0]heptan-3-carboxylat) verwendet werden.

In einer weiteren vorteilhaften Ausgestaltung der Erfindung ist vorgesehen, dass das Aushärten in Schritt b) bei einer Luft- und/oder Oberflächenfeuchte zwischen 5 % und 65 % durchgeführt wird. Unter der Luftfeuchte wird im Rahmen der vorliegenden Erfindung die relative Luftfeuchtigkeit, angegeben in Prozent (%), verstanden, die für die aktuelle Temperatur und den aktuellen Druck das Verhältnis des momentanen Wasserdampfgehalts zum maximal möglichen Wasserdampfgehalt in der Umgebungsatmosphäre des Substrats angibt. Entsprechend gibt die Oberflächenfeuchte die relative Luftfeuchte unmittelbar an der Oberfläche des zu beschichtenden Substrats an. Ist das Substrat kälter als die Raumluft, kann es unmittelbar an dessen Oberfläche zu einer Abkühlung der Luft kommen, wodurch die Oberflächenfeuchte teilweise höher sein kann als die (Raum)Luftfeuchte. Unter Werten zwischen 5 % und 65 % werden insbesondere Luft- und/oder Oberflächenfeuchtigkeitswerte von 5 %, 6 %, 7 %, 8 %, 9 %, 10 %, 11 %, 12 %, 13 %, 14 %, 15 %, 16 %, 17 %, 18 %, 19 %, 20 %, 21 %, 22 %, 23 %, 24 %, 25 %, 26 %, 27 %, 28 %, 29 %, 30 %, 31 %, 32 %, 33 %, 34 %, 35 %, 36 %, 37 %, 38 %, 39 %, 40 %, 41 %, 42 %, 43 %, 44 %, 45 %, 46 %, 47 %, 48 %, 49 %, 50 %, 51 %, 52 %, 53 %, 54 %, 55 %, 56 %, 57 %, 58 %, 59 %, 60 %, 61 %, 62 %, 63 %, 64 % oder 65 % sowie entsprechende Zwischenwerte verstanden. Hierdurch können die Eigenschaften der Grundierung optimal eingestellt werden, da Wasser die Härtungsgeschwindigkeit, den Umsatz und den Vernetzungsgrad, das heißt die resultierende Härte bzw. Flexibilität der Grundierung beeinflusst.

Weitere Vorteile ergeben sich, indem die in Schritt b) verwendete Zusammensetzung wenigstens ein Polyol, insbesondere aus einer Gruppe, die Polyethylenglycole, Polypropylenglycole, Polyethylenpropylenglycole und Poly(tetrahydrofuran)diole umfasst, enthält. Dies erlaubt eine gezielte Flexibilisierung der Grundierung.

In einer weiteren vorteilhaften Ausgestaltung der Erfindung ist vorgesehen, dass die in Schritt b) verwendete Zusammensetzung Nanopartikel, insbesondere aus der Gruppe der modifizierten und unmodifizierten Silicapartikel enthält. Die Verwendung von Nanopartikeln als Füllstoffe ermöglicht eine gezielte Funktionalisierung der Grundierung, beispielsweise im Hinblick auf deren Farbgebung, Härtungsschrumpfung, Zähelastifizierung und Wärmeausdehnungskoeffizienten.

In einer weiteren vorteilhaften Ausgestaltung der Erfindung enthält die härtbare Zusammensetzung wenigstens ein Lösemittel, insbesondere ein schwachpolares Lösungsmittel aus der Gruppe Methylenchlorid, Toluol, unpolare Kohlenwasserstoffe und Tetrahydrofuran. Da Ionen die aktive Spezies der Polymerisation darstellen, kann über das Lösemittel bzw. Lösemittelgemisch großer Einfluss auf die Reaktion genommen werden, indem die jeweiligen Ionen gezielt als kovalente Polymere, Kontaktionenpaar, solventgetrenntes Ionenpaar oder als freie Ionen zur Verfügung gestellt werden. Hierdurch können insbesondere die Geschwindigkeit der Polymerisation sowie die mittlere Kettenlänge der Polymere und damit die mechanischen Eigenschaften der Grundierung eingestellt werden.

In einer weiteren vorteilhaften Ausgestaltung der Erfindung ist es vorgesehen, dass die ionische Polymerisation durch Zugabe wenigstens eines Gegenions und/oder wenigstens eines Abbruchreagenzes und/oder durch Backbiting terminiert wird und/oder dass wenigstens ein zweiter Monomertyp zugegeben wird, wenn das wenigstens eine Monomer einen vorbestimmten Polymerisationsgrad erreicht oder überschritten hat. Auch dies stellt eine einfache Möglichkeit dar, um die mechanischen Eigenschaften der Grundierung gezielt einzustellen. Die ionische Polymerisation kann spontan, durch Kombination mit dem Gegenion und/oder durch Zusatz von Abbruchreagenzien (Wasser, Methanol etc.) abgebrochen werden. Wird nur die wachsende Kette abgebrochen, z. B. durch Protonenübertragung auf ein Monomer oder durch Backbiting und Eliminierung eines Protons, wird zwar der Polymerisationsgrad begrenzt, die Polymerisationsgeschwindigkeit bleibt jedoch zumindest näherungsweise unverändert. Unter Backbiting versteht man eine intramolekulare elektrophile aromatische Substitution, die insbesondere bei aromatischen Monomeren möglich ist, wodurch der Initiatorkomplex zurückgebildet wird. Gibt man wenigstens ein zweites (anders geartetes) Monomer hinzu, können Blockcopolymere hergestellt werden. Dabei ist es natürlich möglich, beim Erreichen oder Überschreiten einer bestimmten mittleren Kettenlänge jeweils andersartige Monomere zuzugeben, um verschiedene Blockcopolymere aus zwei, drei, vier oder mehr Monomertypen herzustellen.

Weitere Vorteile ergeben sich, wenn die härtbare Zusammensetzung mittels eines egalisierenden Streichverfahrens, insbesondere mittels Rakel, Klinge und/oder Filmpresse, und/oder mittels eines Konturstreichverfahrens, insbesondere mittels Gießen, Sprühen, Vorhangbeschichten und/oder Luftbürste, und/oder durch ein Druckverfahren, insbesondere durch Flachdruck, Tiefdruck, Digitaldruck, Siebdruck und/oder Hochdruck auf das Substrat aufgebracht wird. Die Verwendung eines egalisierenden Streichverfahrens erlaubt eine Materialglättung und ist insoweit besonders zweckmäßig, als dass gegebenenfalls anschließende kontaktlose Auftragsverfahren die Kontur der Oberfläche des Substrats weitgehend erhalten. Dies bedeutet, dass eine raue Oberflächenkontur des Basismaterials bzw. des Substrats mithilfe eines egalisierenden Streichverfahrens ausgeglichen und damit geglättet wird. Es wird in der Regel eine umso höhere Produktqualität erreicht, je glatter die Materialbahn ist. Durch die Verwendung von egalisierenden oder nivellierenden Streichverfahren kann zusammenfassend auf rauen Substraten eine Grundierung mit einer besonders glatten Oberfläche erzeugt werden. Diese glatte Oberfläche eignet sich dann besonders für eine nachfolgende Erzeugung der metallhaltigen Schicht. Die Verwendung von Konturstreichverfahren bietet den grundsätzlichen Vorteil, dass an der Kontaktstelle zwischen Substrat und Zusammensetzung kein Druck ausgeübt wird, sodass ein (zu) tiefes Eindringen der Zusammensetzung in das Cellulose-Basismaterial vermieden wird. Hierdurch können besonders gleichmäßige Grundierungen hergestellt werden. Gleichzeitig werden besonders geringe Auftragsmengen an Zusammensetzung benötigt, um eine gewünschte Dicke der Grundierung zu erzielen, wodurch das Verfahren besonders wirtschaftlich durchgeführt werden kann. Mit Hilfe eines Druckverfahrens kann die Grundierung besonders schnell und flexibel auf dem Substrat erzeugt werden, wobei die Oberfläche des Substrats bzw. der Grundierung bei Bedarf gleichzeitig strukturiert werden kann.

In einer weiteren Vorteilhaften Ausgestaltung der Erfindung wird die Grundierung vor Schritt c) oberflächenbehandelt. Hierdurch können das Aufbringen und die Haftung der nachfolgenden Schicht(en) verbessert werden. Beispielsweise kann die Grundierung zu diesem Zweck plasmabehandelt werden. Weiterhin ist es möglich, die Grundierung mit einer bestimmten optischen Anmutung zu versehen oder anderweitige Funktionalisierungen durchzuführen.

In weiterer Ausgestaltung der Erfindung ist es vorgesehen, dass die metallhaltige Schicht durch Aufbringen und Trocknen und/oder Härten eines Metalliclacks und/oder durch physikalische und/oder chemische Gasphasenabscheidung, insbesondere durch metallorganische chemische Gasphasenabscheidung hergestellt wird. Dies stellt eine besonders flexible Möglichkeit zum Erzeugen der metallhaltigen Schicht dar.

In einer weiteren vorteilhaften Ausgestaltung der Erfindung wird auf die metallhaltige Schicht eine insbesondere opake oder transparente Deckschicht aufgebracht. Neben einem Schutz der metallhaltigen Schicht vor Umwelteinflüssen kann hierdurch auch die optische Anmutung des Verpackungsmaterials bedarfsweise beeinflusst werden.

Weiterhin wird ein Verpackungsmaterial offenbart, umfassend ein cellulosehaltiges Substrat mit einem Schichtsystem, wobei das Schichtsystem wenigstens eine Grundierung und eine metallhaltige Schicht aufweist. Eine verbesserte Haftung der Grundierung auf dem cellulosehaltigen Substrat des Verpackungsmaterials ist dadurch sichergestellt, dass die Grundierung wenigstens ein durch ionische Polymerisierung gehärtetes Polymer umfasst oder ist. Der Schrumpf einer durch ionische Polymerisation hergestellten Grundierung ist wesentlich geringer als bei einer durch radikalische Polymerisation hergestellten und liegt typischerweise unter 5 %, insbesondere unter 3 %. Dadurch besitzt die Grundierung eine besonders gute Haftung auf dem cellulosehaltigen Substrat. Darüber hinaus sind Ionen als Träger der Polymerisierungsreaktion wesentlich langlebiger als Radikale, reagieren sehr selektiv und sind unempfindlicher gegenüber Sauerstoff, so dass die Polymerisierung ohne Schutzgasatmosphäre durchführbar ist und nach der Initiierung sogar im Dunkeln kontinuierlich fortschreiten kann, so dass auch bei stark gefärbten und besonders dicken Grundierungen eine Durchhärtung bis zum Substrat gewährleistet ist. Weiterhin ermöglicht eine ionische Polymerisation die Herstellung von sehr flexiblen Grundierungen mit dementsprechend geringer Bruchneigung, was bei der Verwendung des erfindungsgemäßen Verpackungsmaterials zur Herstellung von Verpackungen von besonderem Vorteil ist. Speziell Rillungen, Hoch- und Tiefprägungen sowie Microprägungen benötigen einen hoch flexiblen Untergrund bzw. eine hoch flexible Grundierung. Im Unterschied zu radikalisch polymerisierenden Zusammensetzungen können ionisch polymerisierende Zusammensetzungen zudem zumindest annähernd geruchsfrei bzw. emissionsfrei formuliert werden und führen nach der Polymerisation zu ebenso emissionsarmen oder emissionsfreien Grundierungsschichten, was zu einem deutlich geringeren Gefährdungs- und Belästigungspotenzial für den Verarbeiter bei der Herstellung führt. Ebenso kann vorteilhaft auf aufwändige und teuere Inertgas- oder Absauganlagen verzichtet werden. Weitere Vorteile bestehen in der Möglichkeit, hochglänzende metallhaltige Schichten auf der erfindungsgemäß hergestellten Grundierung zu erzeugen, da diese bei der Härtung aufgrund des gleichmäßigen Reaktionsfortschritts von der Oberfläche in Richtung des Substrats eine entsprechend gleichmäßige und gut beschichtbare Oberfläche für die metallhaltige Schicht bildet, wobei Unebenheiten der Substratoberfläche automatisch egalisiert werden. Das cellulosehaltige Substrat kann grundsätzlich unbeschichtet oder bereits mit einer oder mehreren Schichten versehen sein, wobei ein unbeschichtetes Substrat bevorzugt ist. Beispielsweise kann das Substrat gestrichenes oder ungestrichenes Papier, gestrichener oder ungestrichener Karton oder gestrichene oder ungestrichene Pappe sein. Vorzugsweise kann das Cellulose-Basismaterial des Substrats eine flächenbezogenen Masse zwischen 5 g/m² und 2000 g/m², insbesondere zwischen 100 g/m² und 1000 g/m² und bevorzugt zwischen 200 g/m² und 800 g/m² aufweisen. Hierdurch kann das Verpackungsmaterial besonders flexibel an unterschiedliche Anwendungszwecke angepasst werden. Wenn das Basismaterial eine flächenbezogene Masse zwischen etwa 5 g/m² und etwa 150 g/m² aufweist, wird es im Rahmen der Erfindung als Papier bezeichnet. Basismaterial mit einer flächenbezogenen Masse zwischen etwa 150 g/m² und etwa 800 g/m² wird im Rahmen der Erfindung als Karton bezeichnet, während Basismaterial mit einer flächenbezogenen Masse zwischen etwa 800 g/m² und etwa 2000 g/m² als Pappe bezeichnet wird. In einfachster Ausgestaltung besteht die Grundierung ausschließlich aus dem ionisch polymerisierten Polymer. Alternativ kann es vorgesehen sein, dass die Grundierung neben dem ionisch polymerisierten Polymer weitere Stoffe enthält. Weiterhin kann das Substrat ein Schichtstoff sein. Ein Schichtstoff besteht aus einer oder mehreren, in einem Harz wie Phenolharz oder Melaminharz getränkten Papierschichten, die unter Hochdruck zusammengefügt werden. Die oberste Schicht des Schichtsystems (Finishfilm) kann ein opaker oder transparenter Decklack (Overlay) zum Schutz vor mechanischer Einwirkung sein. Ebenso kann wenigstens eine Schicht des Schichtsystems mit einem Motiv versehen sein (dekorativer Schichtstoff). Weiterhin kann vorgesehen sein, dass das Verpackungsmaterial mit elektrischen bzw. elektronischen Bauelementen und/oder Energieträgern bestückt ist, die über die metallhaltige Schicht ggf. in Form von Leiterbahnen galvanisch miteinander verbunden sind ("Papier- oder Kartonplatine"). Weitere Merkmale und deren Vorteile sind den Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts und umgekehrt anzusehen sind.

Ein zweiter Aspekt der Erfindung betrifft eine Verpackung, welche zumindest ein Verpackungsmaterial umfasst, das durch ein Verfahren gemäß dem ersten Erfindungsaspekt erhalten ist. Hierdurch wird eine verbesserte Haftung der Grundierung auf dem cellulosehaltigen Substrat des Verpackungsmaterials sichergestellt. Die Verpackung kann beispielsweise als Lebensmittelverpackung, insbesondere als Verpackung für feste Lebensmittel, als Verpackung für Süßigkeiten oder als Getränkeverpackung für flüssige Lebensmittel, als Verpackung für Tabakwaren, als Geschenk- oder Umverpackung, als Tragverpackung etc. ausgebildet sein.

Weitere Merkmale und deren Vorteile sind den Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts und umgekehrt anzusehen sind.

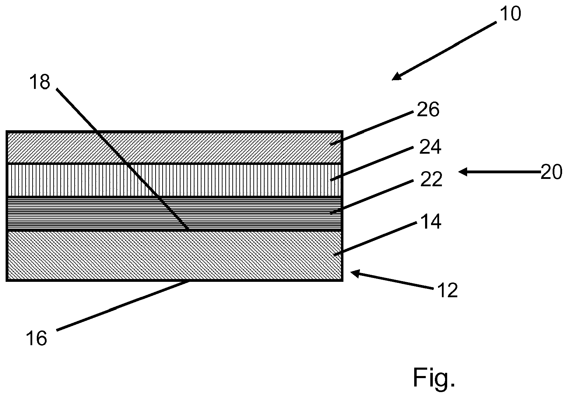

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Dabei zeigt die einzige Figur eine schematische seitliche Schnittansicht eines erfindungsgemäßen Verpackungsmaterials gemäß einem Ausführungsbeispiel.

Die einzige Figur zeigt eine schematische seitliche Schnittansicht eines erfindungsgemäßen Verpackungsmaterials 10 gemäß einem Ausführungsbeispiel. Das Verpackungsmaterial umfasst ein Substrat 12, welches aus einem cellulosehaltigen Basismaterial 14 und eine einem Verpackungsgut abzuwendende Innenseite 16 sowie eine dem Verpackungsgut abzuwendende Außenseite 18 aufweist. Bei dem Basismaterial 14 handelt es sich im vorliegenden Ausführungsbeispiel um ungestrichenes Papier mit einer flächenbezogenen Masse von etwa 100 g/m². Auf der Außenseite 18 des Substrats 12 ist ein Schichtsystem 20 ausgebildet, welches eine Grundierung 22, eine metallhaltige Schicht 24 sowie einer Deckschicht 26 umfasst. Zur Herstellung der Grundierung 22, die grundsätzlich auch als Primer bezeichnet werden kann, wurde das Substrat 12 mit einer Zusammensetzung beschichtet, die ein kationisch polymerisierbares Monomer enthielt, das durch Bestrahlung mit UV-Licht gehärtet wurde. Als Monomer wurde das cycloaliphatische Epoxidharz 7-Oxa-bicyclo[4.1.0]heptan-3-ylmethyl-7-oxa-bicyclo[4.1.0]heptan-3-carboxylat mit der Formel 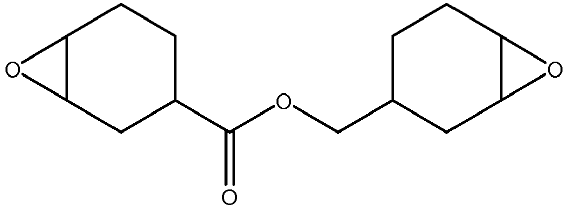 zusammen mit einem Antimonhexafluorid basierten Photoinitiator der Formel 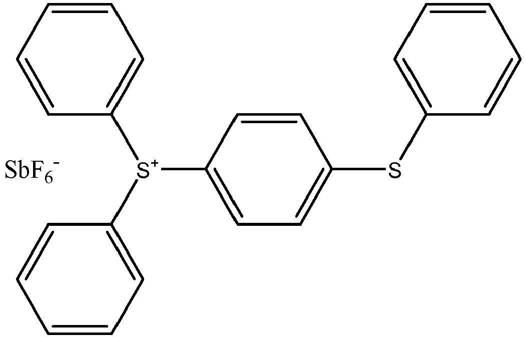 verwendet. Alternativ oder zusätzlich können grundsätzlich auch andere Epoxide und/oder Vinylharz-basierte Monomere verwendet werden. Durch Öffnung der Epoxid-Ringe startet die kationische Polymerisation und bewirkt ein fortlaufendes Kettenwachstum. Der Schrumpf bei der Polymerisation betrug dabei maximal 3 %, wodurch eine hervorragende Haftung auf dem Substrat 12 erzielt wurde. Aufgrund der Unempfindlichkeit der kationischen Polymerisation gegenüber Sauerstoff konnte die Reaktion ohne Schutzgasatmosphäre durchgeführt werden. Die Luftfeuchte wurde auf etwa 30 % eingestellt. Zusätzlich wurde die Zusammensetzung bereits vor der UV-Bestrahlung mittels einer Infrarot-Wärmequelle auf eine Temperatur von etwa 45 °C oder mehr erwärmt, um eine Erhöhung der Reaktionsgeschwindigkeit zu erzielen. Die Temperatur des Substrats 12 wurde bis zum Abschluss der Polymerisierung auf mindestens 40 °C gehalten, um eine vollständige Durchhärtung der Grundierung 22 sicherzustellen. Neben einer sehr guten Flexibilität besitzt die Grundierung 22 auch eine hohe Abriebsfestigkeit sowie einen sehr hohen Glanz aufgrund der gleichmäßigen Oberfläche, wodurch neben der Haftung auch der Glanz und die Reflexion der nachfolgend aufgebrachten metallhaltigen Schicht 24 erheblich gesteigert wurde. Die Zusammensetzung für die Grundierung 22, die metallhaltige Schicht 24 sowie die abschließende, grundsätzlich optionale Deckschicht 26 wurden jeweils aufgedruckt. Zur Herstellung der metallhaltigen Schicht 24 wurde ein konventioneller Metalliclack aufgetragen und gehärtet. Alternativ kann vorgesehen sein, dass auch der Metalliclack ein ionisch polymerisierbares Monomer als Härter enthält, wodurch gegebenenfalls eine kovalente Anbindung an die Grundierung 22 erzeugt werden kann. Die Deckschicht 26 besteht aus einem transparenten Klarlack und schützt die darunter liegenden Schichten des Schichtsystems 20 vor Umwelteinflüssen.

Es versteht sich, dass das Schichtsystem 20 auch nur auf der Innenseite 16 oder sowohl auf der Innenseite 16 als auch auf der Außenseite 18 erzeugt werden kann. Dabei kann weiterhin vorgesehen sein, dass auf der Innenseite 16 und der Außenseite 18 unterschiedliche oder gleiche Schichtsysteme 20 erzeugt werden.

Die in den Unterlagen angegebenen Parameterwerte zur Definition von Prozess- und Messbedingungen für die Charakterisierung von spezifischen Eigenschaften des Erfindungsgegenstands sind auch im Rahmen von Abweichungen - beispielsweise aufgrund von Messfehlern, Systemfehlern, Einwaagefehlern, DIN-Toleranzen und dergleichen - als vom Rahmen der Erfindung mitumfasst anzusehen.

## Patentansprüche

1. Verfahren zum Herstellen eines beschichteten Verpackungsmaterials (10), insbesondere eines Schichtstoffs, umfassend zumindest die Schritte:
a) Bereitstellen eines cellulosehaltigen Substrats (12);
b) Beschichten zumindest eines Oberflächenbereichs des Substrats (12) mit einer härtbaren Zusammensetzung und Härten der Zusammensetzung unter Ausbildung einer Grundierung (22); und
c) Erzeugen einer metallhaltigen Schicht (24) auf zumindest einem Oberflächenbereich der Grundierung (22);
**dadurch gekennzeichnet, dass**
die in Schritt b) verwendete Zusammensetzung wenigstens ein ionisch polymerisierbares Monomer enthält, das durch ionische Polymerisierung gehärtet wird, und dass die in Schritt b) verwendete Zusammensetzung keine radikalisch polymerisierende Zusammensetzung ist.

2. Verfahren nach Anspruch 1,
**dadurch gekennzeichnet, dass**
die in Schritt b) verwendete Zusammensetzung anionisch oder kationisch und/oder durch lebende ionische Polymerisierung gehärtet wird.

3. Verfahren nach Anspruch 1 oder 2,
**dadurch gekennzeichnet, dass**
die in Schritt b) verwendete Zusammensetzung mittels eines Initiators, insbesondere einer vorzugsweise blockierten Verbindung aus der Gruppe der Lewis- und/oder Brønsted-Säuren und/oder der Lewis- und/oder Brønsted-Basen, und/oder durch thermische und/oder photochemische Aktivierung gehärtet wird.

4. Verfahren nach einem der Ansprüche 1 bis 3,
**dadurch gekennzeichnet, dass**
das wenigstens eine ionisch polymerisierbare Monomer ausgewählt wird aus einer Gruppe, die Epoxide, insbesondere der cycloaliphatischen Epoxide und Glycidylether, Isoprene, Cyanoacrylate, Lactide, Caprolactone, Caprolactame, Alkylcyclotrisiloxane, Vinylether und Isobutene umfasst und/oder aus einer Gruppe, die Verbindungen mit wenigstens einem elektronenschiebenden Substituenten, insbesondere einer oder mehrerer Alkoxy-, Phenyl-, Vinyl- und/oder 1,1-Dialkylgruppen umfasst.

5. Verfahren nach einem der Ansprüche 1 bis 4,
**dadurch gekennzeichnet, dass**
das Aushärten in Schritt b) bei einer Luft- und/oder Oberflächenfeuchte zwischen 5 % und 65 % durchgeführt wird.

6. Verfahren nach einem der Ansprüche 1 bis 5,
**dadurch gekennzeichnet, dass**
die in Schritt b) verwendete Zusammensetzung wenigstens ein Polyol, insbesondere aus einer Gruppe, die Polyethylenglycole, Polypropylenglycole, Polyethylenpropylenglycole und Poly(tetrahydrofuran)diole umfasst, enthält.

7. Verfahren nach einem der Ansprüche 1 bis 6,
**dadurch gekennzeichnet, dass**
die in Schritt b) verwendete Zusammensetzung Nanopartikel, insbesondere aus der Gruppe der modifizierten und unmodifizierten Silicapartikel enthält.

8. Verfahren nach einem der Ansprüche 1 bis 7,
**dadurch gekennzeichnet, dass**
die härtbare Zusammensetzung wenigstens ein Lösemittel, insbesondere ein schwachpolares Lösungsmittel aus der Gruppe Methylenchlorid, Toluol, unpolare Kohlenwasserstoffe und Tetrahydrofuran enthält.

9. Verfahren nach einem der Ansprüche 1 bis 8,
**dadurch gekennzeichnet, dass**
die ionische Polymerisation durch Zugabe wenigstens eines Gegenions und/oder wenigstens eines Abbruchreagenzes und/oder durch Backbiting terminiert wird und/oder dass wenigstens ein zweiter Monomertyp zugegeben wird, wenn das wenigstens eine Monomer einen vorbestimmten Polymerisationsgrad erreicht oder überschritten hat.

10. Verfahren nach einem der Ansprüche 1 bis 9,
**dadurch gekennzeichnet, dass**
die härtbare Zusammensetzung mittels eines egalisierenden Streichverfahrens, insbesondere mittels Rakel, Klinge und/oder Filmpresse, und/oder mittels eines Konturstreichverfahrens, insbesondere mittels Gießen, Sprühen, Vorhangbeschichten und/oder Luftbürste, und/oder durch ein Druckverfahren, insbesondere durch Flachdruck, Tiefdruck, Digitaldruck, Siebdruck und/oder Hochdruck auf das Substrat aufgebracht wird.

11. Verfahren nach einem der Ansprüche 1 bis 10,
**dadurch gekennzeichnet, dass**
die Grundierung (22) vor Schritt c) oberflächenbehandelt wird.

12. Verfahren nach einem der Ansprüche 1 bis 11,
**dadurch gekennzeichnet, dass**
die metallhaltige Schicht (24) durch Aufbringen und Trocknen und/oder Härten eines Metalliclacks und/oder durch physikalische und/oder chemische Gasphasenabscheidung, insbesondere durch metallorganische chemische Gasphasenabscheidung hergestellt wird.

13. Verfahren nach einem der Ansprüche 1 bis 12,
**dadurch gekennzeichnet, dass**
auf die metallhaltige Schicht (24) eine insbesondere opake oder transparente Deckschicht (26) aufgebracht wird.

14. Verpackung, welche zumindest ein Verpackungsmaterial (10) umfasst, das durch ein Verfahren gemäß einem der Ansprüche 1 bis 13 erhalten ist.

## Claims

1. A method for producing a coated packaging material (10), more particularly a laminate, comprising at least the steps of:
a) providing a cellulose-containing substrate (12);
b) coating at least one surface region of the substrate (12) with a curable composition and curing the composition to form a priming coat (22); and
c) generating a metal-containing layer (24) on at least one surface region of the priming coat (22);
**characterized in that**
the composition used in step b) comprises at least one ionically polymerizable monomer, which is cured by ionic polymerization, and **in that** the composition used in step b) is not a radically polymerizing composition.

2. The method as claimed in claim 1,
**characterized in that**
the composition used in step b) is cured anionically or cationically and/or by living ionic polymerization.

3. The method as claimed in claim 1 or 2,
**characterized in that**
the composition used in step b) is cured by means of an initiator, more particularly a preferably blocked compound from the group of the Lewis and/or Bronsted acids and/or the Lewis and/or Bronsted bases, and/or by thermal and/or photochemical activation.

4. The method as claimed in any of claims 1 to 3,
**characterized in that**
the at least one ionically polymerizable monomer is selected from a group which encompasses epoxides, more particularly the cycloaliphatic epoxides and glycidyl ethers, isoprenes, cyanoacrylates, lactides, caprolactones, caprolactams, alkylcyclotrisiloxanes, vinyl ethers and isobutenes, and/or from a group which encompasses compounds having at least one electron-donating substituent, more particularly one or more alkoxy, phenyl, vinyl and/or 1,1-dialkyl groups.

5. The method as claimed in any of claims 1 to 4,
**characterized in that**
the curing in step b) is carried out at an atmospheric and/or surface humidity of between 5% and 65%.

6. The method as claimed in any of claims 1 to 5,
**characterized in that**
the composition used in step b) comprises at least one polyol, more particularly from a group which encompasses polyethylene glycols, polypropylene glycols, polyethylene-propylene glycols and poly(tetrahydrofuran)diols.

7. The method as claimed in any of claims 1 to 6,
**characterized in that**
the composition used in step b) comprises nanoparticles, more particularly from the group of modified and unmodified silica particles.

8. The method as claimed in any of claims 1 to 7,
**characterized in that**
the curable composition comprises at least one solvent, more particularly a weakly polar solvent from the group of methylene chloride, toluene, apolar hydrocarbons, and tetrahydrofuran.

9. The method as claimed in any of claims 1 to 8,
**characterized in that**
the ionic polymerization is terminated by addition of at least one counterion and/or of at least one terminating reagent and/or by backbiting, and/or **in that** at least one second monomer type is added when the at least one monomer has reached or exceeded a predetermined degree of polymerization.

10. The method as claimed in any of claims 1 to 9,
**characterized in that**
the curable composition is applied to the substrate by means of a leveling coating process, more particularly by means of doctor blade, blade and/or film press and/or by means of a contour coating process, more particularly by means of casting, spraying, curtain coating and/or airbrush, and/or by a printing process, more particularly by planographic printing, gravure printing, digital printing, screen printing and/or relief printing.

11. The method as claimed in any of claims 1 to 10,
**characterized in that**
the priming coat (22) is surface-treated before step c).

12. The method as claimed in any of claims 1 to 11,
**characterized in that**
the metal-containing layer (24) is produced by applying and drying and/or curing a metallic paint and/or by physical and/or chemical vapor deposition, more particularly by organometallic chemical vapor deposition.

13. The method as claimed in any of claims 1 to 12,
**characterized in that**
a top layer (26), which more particularly is opaque or transparent, is applied to the metal-containing layer (24).

14. A package which comprises at least one packaging material (10) which is obtained by a method as claimed in any of claims 1 to 13.

## Revendications

1. Procédé de fabrication d'un matériau d'emballage revêtu (10), en particulier d'un stratifié, comprenant au moins les étapes, consistant à :
a) mettre à disposition un substrat cellulosique (12) ;
b) revêtir au moins une zone de la surface du substrat (12) avec une composition durcissable et durcir la composition avec constitution d'une couche de fond (22) et
c) produire une couche métallique (24) sur au moins une zone de la surface de la couche de fond (22) ;
**caractérisé en ce que**
la composition, utilisée au cours de l'étape b), contient au moins un monomère ioniquement polymérisable, qui est durci par le biais d'une polymérisation ionique et **en ce que** la composition, utilisée au cours de l'étape b), n'est pas une composition radicalement polymérisante.

2. Procédé selon la revendication 1,
**caractérisé en ce que**
la composition, utilisée au cours de l'étape b), est durcie de manière anionique ou cationique et / ou par le biais d'une polymérisation ionique vivante.

3. Procédé selon la revendication 1 ou 2,
**caractérisé en ce que**
la composition, utilisée au cours de l'étape b), est durcie au moyen d'un initiateur, en particulier d'une liaison de préférence bloquée du groupe des acides de Lewis et / ou de Brønsted et / ou des bases de Lewis et / ou de Brønsted et / ou par le biais d'une activation thermique et / ou photochimique.

4. Procédé selon l'une des revendications 1 à 3,
**caractérisé en ce que**
le au moins un monomère ioniquement polymérisable est sélectionné dans un groupe qui comprend les époxydes, en particulier les époxydes cycloaliphatiques et les éthers de glycidyle, les isoprènes, les cyanoacrylates, les lactides, les caprolactones, les caprolactames, les alkylcyclotrisiloxanes, les éthers de vinyle et les isobutènes et / ou dans un groupe qui comprend des liaisons avec au moins un substituant donneur d'électrons, en particulier un ou plusieurs groupes alcoxy, phényle, vinyle et / ou 1,1-dialkyle.

5. Procédé selon l'une des revendications 1 à 4,
**caractérisé en ce que**
le durcissement au cours de l'étape b) est effectué en cas d'une humidité de l'air et / ou en surface entre 5 % et 65 %.

6. Procédé selon l'une des revendications 1 à 5,
**caractérisé en ce que**
la composition, utilisée au cours de l'étape b), contient au moins un polyol, en particulier dans un groupe qui comprend des polyéthylènes glycol, des polypropylènes glycol, des polyéthylène-propylènes glycol et des poly(tétrahydrofurane)diols.

7. Procédé selon l'une des revendications 1 à 6,
**caractérisé en ce que**
la composition, utilisée au cours de l'étape b), contient des nanoparticules, en particulier dans le groupe des particules de silice modifiées et non modifiées.

8. Procédé selon l'une des revendications 1 à 7,
**caractérisé en ce que**
la composition durcissable contient au moins un solvant, en particulier un solvant faiblement polaire dans le groupe du chlorure de méthylène, du toluène, des hydrocarbures non polaires et du tétrahydrofurane.

9. Procédé selon l'une des revendications 1 à 8,
**caractérisé en ce que**
la polymérisation ionique est programmée par l'adjonction d'au moins un contre-ion et / ou d'au moins un agent de blocage des extrémités et / ou par le biais d'un transfert intramoléculaire et / ou qu'au moins un second type de monomère est ajouté, lorsque le au moins un monomère a atteint ou dépassé un degré de polymérisation prédéfini.

10. Procédé selon l'une des revendications 1 à 9,
**caractérisé en ce que**
la composition durcissable est appliquée sur le substrat au moyen d'un procédé de couchage égalisant, en particulier au moyen d'une racle, d'une lame et / ou d'une presse à film et / ou au moyen d'un procédé d'étalage de profils, en particulier par moulage, pulvérisation, couchage au rideau et / ou brosse à air et / ou par le biais d'un procédé d'impression, en particulier par le biais d'une impression à plat, d'une impression en creux, d'une impression numérique, d'une impression en sérigraphie et / ou d'une impression typographique.

11. Procédé selon l'une des revendications 1 à 10,
**caractérisé en ce que**
la couche de fond (22) est traitée en surface avant l'étape c).

12. Procédé selon l'une des revendications 1 à 11,
**caractérisé en ce que**
la couche métallique (24) est élaborée par application et séchage et / ou durcissement d'une laque métallisée et / ou par le biais d'un dépôt physique et / ou chimique en phase gazeuse, en particulier par le biais d'un dépôt chimique en phase gazeuse métallorganique.

13. Procédé selon l'une des revendications 1 à 12,
**caractérisé en ce**
**qu'**une couche de revêtement (26), en particulier opaque ou transparente, est appliquée sur la couche à base métallique (24).

14. Emballage, lequel comprend au moins un matériau d'emballage (10), qui est obtenu par le biais d'un procédé conformément à l'une des revendications 1 à 13.
